# FASCICULE DE BREVET EUROPEEN

(11) **EP 3 835 455 B1**
(45) Date de publication et mention de la délivrance du brevet: **22.06.2022**
(21) Numéro de dépôt: 20212884.9
(22) Date de dépôt: 09.12.2020
(51) Int. Cl.: C25B 1/04, C25B 9/19, C25B 9/70, C25B 15/08, H01M 8/04007, H01M 8/2457, H01M 8/248, H01M 8/00, H01M 8/124

(54) **PLAQUE DE SERRAGE INTEGRANT UN ORGANE CHAUFFANT ET DISPOSITIF ELECTROCHIMIQUE LE COMPORTANT**
KLEMMPLATTE MIT HEIZELEMENT UND ELEKTROCHEMISCHE VORRICHTUNG MIT DIESER KLEMMPLATTE
CLAMPING PLATE INCORPORATING A HEATING ELEMENT AND ELECTROCHEMICAL DEVICE COMPRISING IT

(30) Priorité: 12.12.2019 FR 1914273
(43) Date de publication de la demande: 16.06.2021
(73) Titulaire: Commissariat à l'Energie Atomique et aux Energies Alternatives, 75015 Paris (FR)
(72) Inventeur: PLANQUE, Michel, 38054 GRENOBLE Cedex 09 (FR); ROUX, Guilhem, 38054 GRENOBLE Cedex 09 (FR)
(74) Mandataire: Nony

(56) Documents cités:
- WO-A1-2019/081866

## Description

La présente invention concerne une plaque de serrage, comportant un organe chauffant. La plaque de serrage est notamment destinée à comprimer une unité électrochimique, par exemple d'un dispositif pour générer un courant électrique par combustion d'un gaz, par exemple du dihydrogène ou du monoxyde de carbone, ou pour électrolyser l'eau en dihydrogène et dioxygène, ou le dioxyde de carbone en monoxyde de carbone et dioxygène.

En particulier, elle concerne une pile à combustible et un électrolyseur à oxydes solides, dits de type « SOFC » et « SOEC » respectivement, acronymes anglais de « Solide Oxyde Fuel Cell » et « Solide Oxyde Electrolysis Cell ».

Un tel type de dispositif est connu qui comporte une unité électrochimique comportant un empilement de cellules élémentaires les uns sur les autres, chaque cellule élémentaire étant formée par la superposition d'une anode, d'une membrane électrolytique et d'une cathode.

La membrane électrolytique conductrice d'ions, généralement formée de zircone stabilisée à l'oxyde d'yttrium, est dense afin d'empêcher les gaz provenant de ou circulant vers l'anode et les gaz provenant de ou circulant vers la cathode de se mélanger. Les anode et cathode sont poreuses et sont généralement constituées de cermet, d'un oxyde de structure perovskite ou d'oxyde de cérium.

Deux cellules élémentaires consécutifs de l'empilement sont séparées par un interconnecteur, généralement métallique, qui assure différentes fonctions au sein de l'unité d'électrolyse. L'interconnecteur relie électriquement en série l'anode ou la cathode d'une des cellules élémentaires avec la cathode ou l'anode respectivement de la cellule élémentaire adjacente. Il est en outre muni d'une chambre cathodique pour alimenter la cathode d'une cellule élémentaire en gaz réactif et pour extraire le produit de la réaction gazeux généré par la cathode, et d'une chambre anodique pour alimenter l'anode de la cellule élémentaire adjacente en gaz réactif ou en gaz porteur. Enfin, l'interconnecteur sépare le flux de gaz circulant le long de la cathode d'une cellule élémentaire du flux de gaz circulant le long de l'anode de la cellule élémentaire adjacente.

Par exemple, pour l'électrolyse de l'eau, de la vapeur d'eau est distribuée par l'interconnecteur correspondant à la cathode. Elle est réduite sous l'action d'un courant électrique parcourant la cathode selon la réaction de réduction

H₂O + 2e⁻ → H₂ + O²⁻

Le dihydrogène ainsi produit est évacué du côté de la cathode. Les ions oxygènes migrent de la cathode vers l'anode où ils sont oxydés selon la réaction d'oxydation

2O²⁻ → O₂ + 4e⁻

Le dioxygène ainsi formé est évacué au moyen d'un gaz porteur alimentant l'anode à travers l'interconnecteur correspondant.

Inversement, pour la production d'un courant électrique, du dioxygène est distribué par l'interconnecteur correspondant à la cathode où il est réduit selon la réaction de réduction

O₂ + 4e⁻→ 2O²⁻

Les ions oxygènes migrent de la cathode vers l'anode où s'opère la réaction d'oxydation suivante, en présence de dihydrogène distribué à l'anode par l'interconnecteur correspondant

H₂ + O²⁻ → H₂O + 2e-

Par ailleurs, afin de limiter la résistance électrique de contact entre un interconnecteur et les cellules élémentaires que l'interconnecteur relie et pour étanchéifier l'unité électrochimique, le dispositif comporte un système de serrage comportant deux plaques de serrages comprimant l'unité électrochimique. Un exemple de système de serrage est par exemple décrit dans la demande FR 3 045 215 A1, qui assure un effort de serrage sensiblement constant sur une large plage de température de fonctionnement.

Un tel dispositif, qu'il soit mis en œuvre pour l'électrolyse de l'eau ou pour l'oxydation du dihydrogène, présente un rendement optimal à une température de fonctionnement comprise entre 600°C et 1000°C.

A cette fin, il est par exemple connu de chauffer le dispositif dans un four adapté, qui échange de la chaleur au dispositif par rayonnement et par convection. Cependant, un tel four est encombrant et difficile à manipuler. En outre, il nécessite la mise en œuvre d'un balayage gazeux qui perturbe le transfert par convention. Par ailleurs, le transfert thermique par rayonnement étant dépendant des dimensions du four, la température au sein du dispositif est difficile à réguler.

En outre, il est connu de préchauffer les gaz alimentant les cellules élémentaires, par exemple la vapeur d'eau, préalablement à leur injection à une température comprise entre 600 °C et 1000 °C. Le préchauffage peut être opéré au moyen d'un tube en boucle monté auprès d'une résistance de chauffage du four ou dans un chauffeur électrique. Cependant, de tels moyens de chauffage sont encombrants et complexifient l'assemblage du dispositif. En outre, la fabrication d'un tube en boucle destiné au préchauffage est coûteuse.

Le document WO 2019/081866 A1 décrit une pile à combustible ou un électrolyseur comportant un empilement de cellules élémentaires (20) et un système de serrage, celui-ci comportant une plaque de serrage (43, 45) et un organe chauffant résistif (61) logé à l'intérieur de la plaque de serrage, la plaque comportant un conduit d'alimentation (C) pour distribuer un gaz à l'unité électrochimique, le conduit d'alimentation ayant une forme sinusoïdale et s'étendant dans la masse de la plaque de serrage.

Il existe donc un besoin pour s'affranchir des inconvénients précités.

L'invention vise à satisfaire au moins partiellement ce besoin et propose un dispositif électrochimique choisi parmi une pile à combustible, notamment pour l'oxydation du dihydrogène, du méthane ou du monoxyde de carbone, et un électrolyseur, notamment pour l'électrolyse de la vapeur d'eau et/ou du dioxyde de carbone, le dispositif électrochimique comportant :
- une unité électrochimique comportant un empilement de cellules élémentaires comportant chacune une anode, une cathode et une membrane électrolytique prise en sandwich entre l'anode et la cathode,
- un système de serrage comportant une plaque de serrage monolithique et un organe chauffant résistif logé au moins en partie à l'intérieur de la plaque de serrage,
la plaque de serrage comprimant l'unité électrochimique et comportant un conduit d'alimentation pour distribuer un gaz à l'unité électrochimique, le conduit d'alimentation ayant au moins une portion courbe s'étendant dans la masse de la plaque de serrage.

L'organe chauffant résistif, lorsqu'il est alimenté électriquement, produit de la chaleur par effet Joule, qui est échangée par rayonnement et/ou conduction à la plaque de serrage. La plaque de serrage comprimant l'unité électrochimique peut ainsi transférer efficacement par rayonnement et plus particulièrement par conduction une partie de la chaleur produite par l'organe chauffant à l'unité électrochimique pour la chauffer ou la maintenir en température. Par ailleurs, la chaleur produite par l'organe chauffant peut être transférée à travers la plaque de serrage au gaz circulant dans le conduit d'alimentation, afin de préchauffer le gaz préalablement à son introduction dans l'unité électrochimique.

Ainsi, la conformation de la plaque de serrage et de l'organe chauffant au sein du dispositif électrochimique selon l'invention résulte en une réduction des pertes thermiques vers l'extérieur du dispositif électrochimique. Notamment, la chaleur rayonnée par l'organe chauffant est principalement transmise à l'unité électrochimique par conduction à travers la plaque de serrage, qui est un mode de transfert thermique particulièrement efficace.

Par ailleurs, la disposition de l'organe chauffant à l'intérieur de la plaque de serrage facilite la régulation de la température de l'unité électrochimique. En outre, elle peut permettre de s'affranchir de la mise en œuvre d'un four de chauffage comme selon l'art antérieur. La compacité du dispositif s'en trouve améliorée.

De préférence, la portion de l'organe chauffant logée à l'intérieur de la plaque de serrage et le conduit d'alimentation s'étendent selon des axes longitudinaux curvilignes parallèles. Des axes « curvilignes parallèles » sont à distance constante l'un de l'autre. Ainsi, l'organe chauffant peut transférer la chaleur qu'il génère au conduit d'alimentation sur toute la longueur du conduit d'alimentation.

Par exemple, la distance entre l'axe longitudinal de l'organe chauffant et l'axe longitudinal du conduit d'alimentation peut être inférieure à 20 mm.

La portion de l'organe chauffant logée à l'intérieur de la plaque de serrage et le conduit d'alimentation peuvent s'étendre selon des axes longitudinaux curvilignes confondus.

L'organe chauffant peut être au moins en partie, voire intégralement, logé dans le conduit d'alimentation. Ainsi, au cours du fonctionnement du dispositif électrochimique, l'organe chauffant peut échanger au moins une partie, voire toute la chaleur qu'il génère au gaz s'écoulant à son contact dans le conduit d'alimentation par transfert thermique convectif. De préférence, il est distant de la paroi du conduit d'alimentation. Notamment, il est de préférence logé dans le conduit pour que le gaz s'écoule tout autour de la face latérale de l'organe chauffant.

L'organe chauffant peut être au contact de la plaque de serrage et peut définir une partie de la paroi du conduit d'alimentation. Ainsi au cours du fonctionnement du dispositif électrochimique, l'organe chauffant peut transférer une partie de la chaleur qu'il génère au gaz s'écoulant à son contact dans le conduit d'alimentation par transfert convectif, et une autre partie de ladite chaleur à la plaque de serrage par transfert conductif à la plaque de serrage.

La portion de l'organe chauffant logée à l'intérieur de la plaque de serrage peut être entièrement en contact avec la plaque de serrage. Autrement dit, elle est entièrement prise en masse dans la plaque de serrage. Ainsi l'organe chauffant peut échanger au moins une partie, voire toute la chaleur qu'il génère par échange thermique conductif à la plaque de serrage.

Par ailleurs, la plaque de serrage peut comporter plusieurs conduits d'alimentation, par exemple un conduit d'alimentation cathodique pour distribuer un gaz réactif à la cathode et un conduit d'alimentation anodique pour distribuer un gaz réactif et/ou un gaz porteur à l'anode, et de préférence plusieurs organes chauffants. Afin de chauffer efficacement chacun des gaz s'écoulant dans les conduits d'alimentation respectifs, les portions des organes chauffants à l'intérieur de la plaque de serrage sont de préférence chacune logées dans un des conduits d'alimentation respectifs. Notamment, le nombre de conduits d'alimentation peut être égal au nombre d'organes chauffant.

La plaque de serrage peut comporter plusieurs organes chauffants. Notamment en vue de chauffer de manière optimale le gaz circulant dans le conduit d'alimentation, elle peut comporter un premier organe chauffant dont au moins une partie est logée dans le conduit d'alimentation et un deuxième organe chauffant dont la portion logée à l'intérieur de la plaque de serrage est en contact avec la plaque de serrage.

La portion du deuxième organe chauffant peut être entièrement au contact de la plaque de serrage. On optimise ainsi à la fois le chauffage de l'unité électrochimique et le préchauffage du gaz s'écoulant dans le conduit d'alimentation.

En variante, la portion du deuxième organe chauffant peut définir au moins en partie la paroi du conduit d'alimentation. Ainsi, dans le cas où l'un des organes devient défectueux, il est toujours possible de chauffer le gaz s'écoulant dans le conduit d'alimentation.

L'organe chauffant est résistif, c'est-à-dire qu'il produit de la chaleur par effet Joule lorsqu'il conduit un courant électrique.

L'organe chauffant peut être une tige métallique rigide et coudée.

L'organe chauffant est de préférence fixé sur la plaque de serrage.

De préférence, L'organe chauffant est un câble électrique flexible ou un cordon électrique flexible.

Le câble électrique peut comporter de préférence une âme électriquement conductrice enserrée dans une gaine d'isolation électrique en un matériau diélectrique qui peut comporter, en masse, entre 96,0 % et 99,0 % de magnésie.

La gaine d'isolation électrique est de préférence enserrée dans une gaine de protection, par exemple formé d'un alliage réfractaire tel que l'Inconel^{®} 600, l'acier inoxydable 316L ou l'acier inoxydable 304L. Pour transporter de la vapeur d'eau, une gaine de protection en acier inoxydable est préférée, car elle limite la corrosion du câble.

L'âme conductrice est de préférence métallique et présente, de préférence, une résistance électrique comprise entre 1000 Ω/m et 20000 Ω/m, par exemple de 7,0±0,7 Ω/m L'âme conductrice est par exemple formée d'un fil métallique ou d'un toron de fils métalliques. Elle peut présenter un diamètre compris entre 1,0 mm et 5,0 mm, par exemple de 2,0±0,05 m et être apte à générer, par effet Joule, une puissance thermique linéique supérieure à 100 W.m⁻¹.

Le câble peut comporter, à chacune de ses extrémités, des terminaisons froides intégrées, faisant par exemple saillie de la plaque de serrage, notamment à travers des ouvertures ménagées dans une ou plusieurs des faces latérales de la plaque de serrage.

De préférence, l'organe chauffant s'étend à l'intérieur de la plaque de serrage dans un plan parallèle à au moins une des grandes faces de la plaque de serrage, de préférence de la grande face de la plaque de serrage en regard de l'unité électrochimique.

En particulier, le plan dans lequel s'étend l'organe chauffant peut être un plan médian selon l'épaisseur de la plaque de serrage.

De préférence, l'organe chauffant est distant de la grande face de la plaque de serrage en regard de l'unité électrochimique. On limite ainsi les risques d'endommagement de l'unité électrochimique liés à une surchauffe localisée par l'organe chauffant.

A l'intérieur de la plaque de serrage, afin de développer une surface d'échange thermique avec le gaz circulant dans le conduit et/ou avec la plaque de serrage, l'organe chauffant comporte de préférence une, de préférence plusieurs portions courbes.

Notamment, l'organe chauffant peut être méandréiforme. Par exemple, il présente la forme d'un serpentin. En variante, il peut présenter la forme d'une spirale ou de plusieurs spirales, par exemple concentriques.

De préférence, la longueur de l'organe chauffant est supérieure à 1 m, par exemple de 6,5 m ± 10 %.

La plaque de serrage présente de préférence deux grandes faces parallèles.

L'épaisseur de la plaque peut être comprise entre 10 et 50 mm, notamment entre 20 mm et 30 mm.

Une grande face de la plaque peut présenter une longueur et/ou une largeur supérieures à 50, par exemple d'environ 200 mm.

De préférence, la plaque de serrage est en un alliage réfractaire, par exemple en un alliage réfractaire à base de nickel, par exemple l'Inconel 600, ou en un acier austénitique réfractaire, par exemple l'acier AISI 310. Les aciers austénitiques réfractaires présentent l'avantage d'une bonne résistance à la corrosion et au fluage à une température supérieure à 400 °C.

La plaque de serrage peut être cruciforme et comporter une portion centrale, ayant une forme de pavé droit, et des bras s'étendant à partir de la portion centrale selon des directions contenues dans un plan parallèle à au moins une des grandes faces de la plaque de serrage. Les bras peuvent être chacun pourvus d'orifices de serrage, par exemple filetés. Le système de serrage peut comprendre des tiges de serrage qui s'étendent au travers des orifices de serrage, pour transmettre un effort de compression de la plaque de serrage sur l'unité électrochimique.

De préférence, le conduit d'alimentation est formé dans la portion centrale et l'organe chauffant est logé dans la portion centrale. Une des faces de la portion centrale est, de préférence entièrement, au contact de l'unité électrochimique.

De préférence, le conduit d'alimentation s'étend, en tout ou partie, selon un plan parallèle à une ou plusieurs des grandes faces de la plaque de serrage, en particulier à la grande face de la plaque de serrage comprimant l'unité électrochimique. Ainsi, en fonctionnement, on augmente la surface d'échange pour transférer la chaleur qui peut être générée par l'unité électrochimique et qui est transmise à la plaque de serrage au gaz circulant dans le conduit d'alimentation. Le gaz peut ainsi être surchauffé avant d'atteindre l'unité électrochimique.

Afin d'augmenter encore la surface d'échange thermique entre le gaz circulant dans le conduit et la plaque de serrage et/ou avec l'organe chauffant le cas échéant, le conduit d'alimentation comporte une portion courbe. De préférence, il comporte plusieurs portions courbes.

Notamment, le conduit d'alimentation peut comporter une ou de préférence plusieurs portions méandréiformes. Par exemple, il comporte une portion présentant une forme d'un serpentin. En variante, il peut comporter une portion présentant une forme d'une spirale.

Le conduit d'alimentation peut présenter une section transverse à son axe longitudinal curviligne qui est délimitée par un contour circulaire ou hexagonal. Une section transverse de contour hexagonal est notamment de fabrication simple par fabrication additive. Le diamètre de la section transverse peut être compris entre 3 et 12 mm. Il correspond au diamètre du plus petit cercle circonscrit sur le contour de la section transverse.

Le conduit d'alimentation comporte une ouverture d'entrée de gaz et une ouverture de sortie de gaz. L'ouverture d'entrée et/ou l'ouverture de sortie de gaz peuvent déboucher sur une grande face et/ou sur une face latérale de la plaque de serrage. De préférence, l'ouverture d'entrée de gaz découche sur une grande face de la plaque de serrage et l'ouverture de sortie de gaz débouche sur une grande face opposée de la plaque de serrage.

De préférence, le conduit d'alimentation comporte plusieurs, notamment deux, étages de conduit, espacés l'un de l'autre selon l'épaisseur de la plaque de serrage, et qui s'étendent chacun dans des plans parallèles à une ou plusieurs des grandes faces de la plaque de serrage. Les étages de conduit consécutifs peuvent être en communication de fluide au moyen d'un canal de liaison formé dans la plaque de serrage et qui débouche par ses extrémités opposées dans les étages de conduits respectifs.

Les étages de conduit peuvent être superposés au moins partiellement, de préférence au moins entièrement les uns sur les autres. De préférence, les axes longitudinaux curvilignes des étages de conduit sont parallèles les uns aux autres. De préférence, les axes longitudinaux curvilignes des étages de conduit sont images l'un de l'autre par translation selon une direction normale à une grande face de la plaque de serrage. Les étages de conduit peuvent être au registre l'un de l'autre selon l'épaisseur de la plaque de serrage.

L'organe chauffant peut être logé dans chaque étage de conduit. Les parties de l'organe chauffant logées dans deux étages de conduit consécutifs peuvent être connectées électriquement l'une à l'autre à travers le canal de liaison.

De préférence, le conduit d'alimentation est en communication de fluide avec la cathode ou avec l'anode de chaque cellule élémentaire respectivement, pour alimenter la cathode en un gaz réactif de cathode ou l'anode en gaz réactif d'anode et/ou en gaz porteur.

La plaque de serrage peut comporter :
- un conduit d'alimentation cathodique en communication de fluide avec la cathode de chaque cellule élémentaire, pour alimenter la cathode en un gaz réactif, et
- un conduit d'alimentation anodique en communication de fluide avec l'anode de chaque cellule élémentaire, pour alimenter l'anode en un gaz réactif et/ou un gaz porteur.

De préférence, le dispositif électrochimique comporte un organe chauffant cathodique et un organe chauffant anodique, l'organe chauffant cathodique et le conduit d'alimentation cathodique et/ou l'organe chauffant anodique et le conduit d'alimentation anodique étant tels que décrits ci-dessus.

Par ailleurs, la plaque de serrage peut comporter un conduit d'évacuation anodique en communication de fluide avec l'unité électrochimique, pour l'évacuation d'un flux gazeux contenant le ou les produits de réaction anodique, et/ou un conduit d'évacuation cathodique en communication de fluide avec l'unité électrochimique, pour l'évacuation d'un flux gazeux contenant le ou les produits de réaction cathodique. Le conduit d'évacuation anodique et/ou le conduit d'évacuation cathodique sont ménagés dans la plaque de serrage. Avantageusement, notamment dans une variante où le dispositif est placé dans l'enceinte d'un four, le flux gazeux d'évacuation anodique et/ou le flux gazeux d'évacuation cathodique peuvent échanger la chaleur qu'ils contiennent, provenant notamment du chauffage au moyen du four, avec la plaque de serrage et ainsi chauffer cette dernière. Le conduit d'évacuation anodique et/ou le conduit d'évacuation présentent de préférence au moins une portion courbe, de préférence plusieurs portions méandréiformes, pour augmenter la surface d'échange de chaleur entre les flux gazeux d'évacuation anodique et/ou cathodique respectivement. Ils sont de préférence disposés dans la portion centrale de la plaque de serrage.

Le système de serrage comporte de préférence une autre plaque de serrage, l'unité électrochimique étant prise en sandwich entre la plaque de serrage et l'autre plaque de serrage et comprimée par la plaque de serrage et l'autre plaque de serrage.

L'autre plaque de serrage peut être identique à la plaque de serrage telle que décrite ci-dessus, et le dispositif peut comporter un autre organe chauffant résistif disposé au moins en partie à l'intérieur de la plaque de serrage.

En variante, l'autre plaque de serrage peut comporter une portion centrale pleine. Notamment, elle peut être exempte de conduit d'alimentation en gaz et/ou de conduit d'évacuation de gaz.

De préférence, la plaque de serrage est la plaque inférieure du système de serrage.

La plaque de serrage et l'autre plaque de serrage peuvent être reliées par les tiges de serrage décrites ci-dessus, de préférence parallèles les unes aux autres, la plaque de serrage et l'autre plaque de serrage étant mobiles l'une par rapport à l'autre en translation le long des tiges de serrage.

Le système de serrage peut comporter des organes de serrage coopérant chacun avec une des tiges de serrage respectives pour maintenir la plaque de serrage à distance constance de l'autre plaque de serrage. Ainsi, une compression permanente de l'unité électrolytique est assurée.

L'unité électrochimique peut comporter plus de deux, voire plus de dix, mieux plus de cent cellules élémentaires.

De préférence, l'anode et/ou la cathode et/ou la membrane électrolytique de chaque cellule élémentaire comporte, voire consiste en, un oxyde métallique sous forme solide.

L'unité électrochimique comporte un ou de préférence plusieurs interconnecteurs, étant chacun disposé entre deux cellules élémentaires consécutives de l'empilement. Chaque interconnecteur se présente de préférence sous la forme d'une plaque dont une des grandes faces est au contact de l'anode d'une des cellules élémentaires et dont l'autre grande face est au contact de la cathode de la cellule élémentaire adjacente. Chaque interconnecteur peut comporter une rainure débouchant sur la grande face au contact de l'anode d'une des cellules élémentaires, et définit, ainsi une chambre anodique, et une autre rainure débouchant sur la grande face est au contact de la cathode de la cellule élémentaire adjacente, et définit ainsi une chambre cathodique. Les chambres anodiques et cathodiques sont en communication fluidique respectivement avec le conduit d'alimentation anodique et le conduit d'alimentation cathodique.

Le dispositif électrochimique peut comporter en outre un générateur électrique connecté électriquement à l'organe chauffant résistif. Le générateur électrique peut être configuré pour délivrer une puissance électrique suffisante pour que l'organe chauffant chauffe la plaque de serrage à une température supérieure à 400 °C, de préférence supérieure à 600 °C, voire supérieure à 800 °C.

Le dispositif électrochimique peut comporter un réservoir cathodique et/ou un réservoir anodique contenant respectivement un fluide cathodique et/ou un fluide anodique. Le réservoir cathodique et/ou le réservoir anodique sont en communication de fluide avec le conduit d'alimentation cathodique et/ou avec le conduit d'alimentation anodique respectivement. Le fluide cathodique et/ou le fluide anodique peuvent être sous forme gazeuse. En variante, ils peuvent être sous forme liquide et le dispositif peut comporter un moyen de chauffage anodique, cathodique respectivement, disposé entre le réservoir anodique, cathodique respectivement et le conduit d'alimentation anodique, cathodique respectivement, pour vaporiser le fluide cathodique sous forme gazeuse.

Le dispositif peut comporter un injecteur cathodique et/ou un injecteur anodique pour injecter le fluide cathodique et/ou le fluide anodique respectivement vers le conduit d'alimentation cathodique et/ou le conduit d'alimentation anodique.

Le dispositif électrochimique peut être une pile à combustible configurée pour oxyder un fluide cathodique choisi parmi le dihydrogène, le méthane, le monoxyde de carbone et leurs mélanges, au moyen d'un fluide anodique. Le fluide anodique peut être du dioxygène ou de l'air. Le dispositif électrochimique peut être relié électriquement à un appareil électrique, par exemple un moteur ou un ordinateur.

En variante, le dispositif électrochimique peut être un électrolyseur pour électrolyser un fluide cathodique choisi parmi la vapeur d'eau, le dioxyde de carbone et leurs mélanges. Il peut être relié électriquement à une source de courant électrique pour alimenter l'unité électrochimique.

Par ailleurs, l'invention concerne un procédé de fabrication d'un système de serrage d'un dispositif électrochimique selon l'invention, le procédé comportant :
a) la fourniture d'une pièce de base et d'au moins un organe chauffant résistif disposé sur la pièce de base, et
b) le dépôt, au moyen d'une méthode de fabrication additive, d'un matériau de revêtement au contact de la pièce de base, et optionnellement de l'organe chauffant, jusqu'à formation d'une plaque de serrage à l'intérieur de laquelle au moins une partie de l'organe chauffant est logée.

La pièce de base peut être en un matériau de base, le matériau de revêtement présentant une conductivité thermique supérieure ou égale à la conductivité thermique du matériau de base.

Le matériau de revêtement peut présenter une conductivité thermique, mesurée à 20°C, supérieure à 15 W/m.K, de préférence supérieure à 20 W/m.K, de préférence supérieure à 50 W/m.K, de préférence supérieure à 100 W/m.K, de préférence supérieure à 200 W/m.K.

De préférence, le matériau de revêtement et le matériau de base sont identiques. De préférence, le matériau de base et le matériau de revêtement sont un alliage réfractaire, de préférence un acier inoxydable.

De préférence, le procédé comporte préalablement à l'étape a) la production de la pièce de base par la méthode de fabrication additive.

Une méthode de « fabrication additive », comme cela est bien connu de l'homme du métier, comporte le dépôt d'un matériau en passes successives pour former un empilement de couches jusqu'à l'obtention d'une pièce ou d'une partie d'une pièce.

La pièce de base présente une forme générale planaire.

La pièce de base peut présenter une rainure s'étendant dans le plan d'extension de la pièce de base et qui débouche selon une grande face de la pièce. La rainure peut être usinée dans la masse de la pièce de base ou peut résulter de la fabrication additive de la pièce de base.

A l'étape a), le procédé peut comporter la mise en place de l'organe chauffant sur la pièce de base, de préférence en superposant l'organe chauffant sur la rainure pour aligner l'axe longitudinal curviligne de la rainure et avec l'axe longitudinal curviligne de l'organe chauffant.

Par exemple, la rainure peut présenter une largeur, mesurée sur la face sur laquelle elle débouche, inférieure au diamètre de l'organe chauffant. L'organe chauffant peut surmonter la rainure de manière à obturer l'ouverture par laquelle la rainure débouche sur la face de la pièce de base, pour définir un conduit dans la plaque de serrage.

L'organe chauffant peut notamment reposer sur les bords de la rainure.

Dans un autre exemple, l'organe chauffant est superposé à la rainure et maintenu à distance de la rainure. Il peut notamment présenter un diamètre inférieur à la largeur de la rainure.

Selon encore un autre exemple, l'organe chauffant présente une forme complémentaire à la paroi de la rainure et repose sur la paroi de la rainure. Par exemple, la rainure présente une section transverse de contour en arc de cercle s'étendant sur 180° au plus, et l'organe chauffant présente une section transverse cylindrique de rayon égal au rayon dudit contour.

L'étape a) peut comporter la fixation de l'organe chauffant sur la pièce de base, par exemple en bridant l'organe chauffant au moyen d'agrafes montées sur la pièce de base.

A l'étape b), le matériau de revêtement peut être déposé au contact de l'organe chauffant.

Notamment, notamment dans la variante où l'organe chauffant obture l'ouverture de la rainure ou repose sur le fond de la rainure, le matériau de revêtement peut être déposé sur toute la face latérale de l'organe chauffant accessible au matériau de revêtement. L'organe chauffant peut ainsi être pris au moins partiellement, voire totalement en masse dans la plaque de serrage.

Le matériau de revêtement peut être déposé sur la pièce de base et/ou sur l'organe chauffant de manière à former un conduit se superposant à l'organe chauffant. Ainsi, le matériau de revêtement déposé est exempt de contact avec l'organe chauffant.

En particulier, le dépôt peut être effectué en recouvrant la rainure et l'organe chauffant avec des couches successives faites du matériau de revêtement pour former un conduit comportant la rainure, et optionnellement l'organe chauffant étant logé dans le conduit.

Par ailleurs, le procédé peut être mis en œuvre pour fabriquer une plaque de serrage comportant plusieurs organes chauffants, par exemple s'étendant dans des plans parallèles et situés à des positions différentes dans l'épaisseur de la plaque de serrage.

Notamment, à l'étape a), la pièce de base peut comporter un premier organe chauffant disposé à l'intérieur de la pièce de base, et on dépose un deuxième organe chauffant sur la pièce de base. Par exemple, le premier organe chauffant est pris dans la masse de la pièce de base. Selon un autre exemple, le premier organe chauffant est logé dans un premier conduit ménagé dans la pièce de base.

Par ailleurs, le dépôt à l'étape b) peut être effectué au moyen d'un dispositif de fabrication additive comportant une tête de dépôt pour déposer le matériau de revêtement, la méthode de fabrication additive comportant de préférence l'alimentation de la tête de dépôt avec le matériau de revêtement et le déplacement de la tête de dépôt le long et/ou autour de l'axe longitudinal de l'organe chauffant.

La tête de dépôt peut être montée sur un bras articulé. Le bras articulé peut être mobile en translation selon au moins un axe de translation, voire selon au moins deux, voire trois axes de translation perpendiculaires les uns aux autres et/ou mobile en rotation autour d'au moins un axe de rotation, voire d'au moins deux, voire de trois axes de rotation perpendiculaires les uns aux autres.

En particulier, la méthode de fabrication additive peut être une méthode de « dépôt direct de métal », aussi connue sous l'acronyme « DMD ».

La méthode de fabrication additive peut comporter :
- la projection de particules de départ comportant, de préférence consistant en, le matériau de revêtement sur la pièce de base, et
- la génération d'un faisceau d'énergie concentrée interceptant les particules de départ projetées pour fondre les particules de départ sous forme de gouttelettes en fusion préalablement à la mise en contact des particules de départ sur la pièce de base et optionnellement l'organe chauffant.

Le faisceau d'énergie concentrée peut être choisi parmi un faisceau d'énergie, de préférence un faisceau laser, un plasma et un faisceau d'électrons.

En variante, la méthode de fabrication additive peut être une méthode dite de « dépôt arc-fil », aussi connue sous l'abréviation « WAAM », acronyme anglais de « Wire and Arc Additive Manufacturing ».

La méthode de fabrication additive peut comporter la génération d'un arc électrique pour fondre un fil comportant le matériau de revêtement. Le fil peut être au contact de la pièce de base, préalablement à la génération de l'arc électrique et la méthode de fabrication additive comporte la fusion du fil au contact de la pièce de base.

Le fil peut être fondu au moyen d'un moyen de fusion choisi parmi une torche de soudure TIG comportant une électrode non fusible en tungstène, une torche de soudure à l'arc métallique sous protection gazeuse, aussi dénommée torche de soudure MIG/GMAW, une torche de soudure par faisceau d'électrons, aussi dénommée torche de soudure EB.

Selon un deuxième mode de mise en œuvre, la méthode de fabrication additive comporte la mise en contact du matériau de revêtement à l'état solide avec la pièce de base.

De préférence, la méthode de fabrication additive est une méthode dite de type « cold spray ».

De préférence, la méthode de fabrication additive comporte la projection de particules de départ, telles que décrites ci-dessus, en direction de la pièce de base et/ou de l'organe chauffant, la vitesse des particules de départ étant supersonique, de préférence supérieure à 500 m.s⁻¹ et de préférence inférieure à 1000 m.s⁻¹. Ainsi, les particules de départ sont déformées plastiquement, et notamment aplaties, lors de leur entrée en contact avec la pièce de base et/ou l'organe chauffant et/ou le revêtement en formation, sous l'effet de leur énergie cinétique.

La méthode de fabrication additive peut comporter la génération d'un arc électrique pour fondre un fil comportant le matériau de revêtement.

Enfin, l'invention concerne une méthode de production d'un dispositif électrochimique selon l'invention, comportant la mise en œuvre du procédé de fabrication d'un système de serrage selon l'invention.

L'invention pourra être mieux comprise à la lecture de la description détaillée et des exemples qui vont suivre dans lequel :
[Fig 1] la figure 1 représente une vue en perspective d'un exemple de dispositif électrochimique selon l'invention ;
[Fig 2] la figure 2 est une vue schématique d'une portion d'une unité électrochimique du dispositif de la figure 1 ;
[Fig 3] la figure 3 est un schéma illustrant les réactions d'oxydo-réduction mises en œuvre au cours de l'électrolyse de l'eau ;
[Fig 4a] la figure 4a est une vue d'un exemple de plaque de serrage, vue selon une normale à une de ses grandes faces ;
[Fig 4b] la figure 4b est une vue en perspective, d'une coupe brisée à plans sécants AA, d'une portion de la plaque de serrage de la figure 4a vue entre deux plans de coupe longitudinaux parallèles aux grandes faces de la plaque de serrage ;
[Fig 4c] la figure 4c est une vue de face d'une section transverse de la plaque de serrage, perpendiculaire aux grandes faces de la plaque de serrage ;
[Fig 4d] la figure 4d est une vue en perspective de la section transverse illustrée sur la figure 4c ;
[Fig 5a] la figure 5a est une vue d'un autre exemple de plaque de serrage, vue selon une normale à une de ses grandes faces ;
[Fig 5b] la figure 5b est une vue de la plaque de serrage illustrée sur la figure 5a en coupe selon un plan parallèle à l'une de ses grandes faces ;
[Fig 5c] la figure 5c illustre un écoulement gazeux à l'intérieur d'un étage du conduit ménagé dans la plaque de serrage ;
[Fig 5d] la figure 5d illustre un écoulement gazeux à l'intérieur d'un autre étage du conduit ménagé dans la plaque de serrage ;
[Fig 5e] la figure 5e est une vue en coupe brisée à plans sécants BB et en perspective de la plaque de serrage de la figure 5b ;
[Fig 5f] la figure 5f est une vue en coupe brisée à plans sécants d'une variante de la plaque de serrage illustrée sur la figure 5b ;
[Fig 6a] la figure 6a illustre schématiquement une étape d'un exemple de fabrication de la plaque de serrage illustrée sur les figures 4a à 4e ;
[Fig 6b] la figure 6b illustre schématiquement une étape d'un exemple de fabrication de la plaque de serrage illustrée sur les figures 4a à 4e ;
[Fig 6c] la figure 6c illustre schématiquement une étape d'un exemple de fabrication de la plaque de serrage illustrée sur les figures 4a à 4e ;
[Fig 7a] la figure 7a illustre schématiquement une étape d'un exemple de fabrication de la plaque de serrage illustrée sur la figure 5e ;
[Fig 7b] la figure 7b illustre schématiquement une étape d'un exemple de fabrication de la plaque de serrage illustrée sur la figure 5e ;
[Fig 7c] la figure 7c illustre schématiquement une étape d'un exemple de fabrication de la plaque de serrage illustrée sur la figure 5e ;
[Fig 8a] la figure 8a illustre schématiquement une étape d'un exemple de fabrication de la plaque de serrage illustrée sur la figure 5f ;
[Fig 8b] la figure 8b illustre schématiquement une étape d'un exemple de fabrication de la plaque de serrage illustrée sur la figure 5f ;
[Fig 8c] la figure 8c illustre schématiquement une étape d'un exemple de fabrication de la plaque de serrage illustrée sur la figure 5f ;
[Fig 8d] la figure 8d illustre schématiquement une étape d'un exemple de fabrication de la plaque de serrage illustrée sur la figure 5f ;
[Fig 8e] la figure 8e illustre schématiquement une étape d'un exemple de fabrication de la plaque de serrage illustrée sur la figure 5f.

Dans les dessins, les différents organes représentés ne le sont pas nécessairement à l'échelle.

On décrit par la suite un exemple de dispositif électrochimique 5 qui est un électrolyseur pour réduire l'eau en dihydrogène et en dioxygène. L'homme du métier saura aisément déterminer à partir de cette description comment concevoir un exemple de dispositif électrochimique sous la forme d'une pile à combustible pour oxyder du dihydrogène et produire un courant électrique et de l'eau.

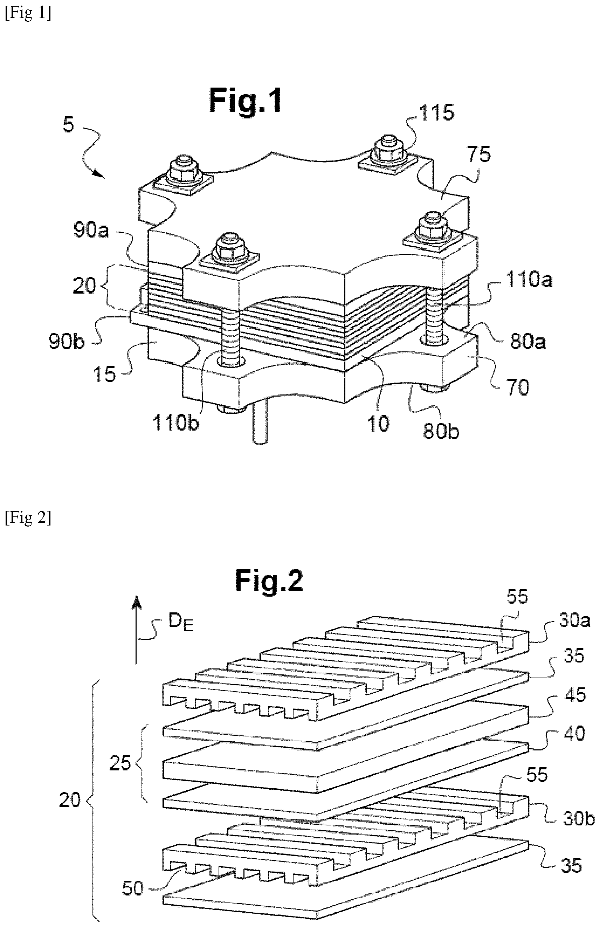

La figure 1 illustre un exemple d'électrolyseur. Il comporte une unité électrochimique 10 et un système de serrage 15.

L'unité électrochimique comporte un empilement 20 de cellules élémentaires 25 empilées selon une direction d'empilement D_{E}. Elle comporte en outre des interconnecteurs 30a-b métalliques disposés chacun entre deux cellules élémentaires consécutives de l'empilement.

Comme illustré sur la figure 2, chaque cellule élémentaire comporte une anode 35, une cathode 40 et une membrane électrolytique 45 prise en sandwich entre l'anode et la cathode. L'anode, la cathode et la membrane se présentent sous la forme de plaques présentant des longueur et largeur identiques et s'étendant selon des plans parallèles et perpendiculaires à la direction d'empilement.

L'anode et la cathode sont poreuses au dioxygène à l'hydrogène et à la vapeur d'eau. Elles sont en un matériau à base oxyde, par exemple un cermet, un oxyde de structure perovskite et/ou l'oxyde de cérium. La membrane électrolytique est conductrice d'ions, et peut être en zircone stabilisée à l'oxyde d'yttrium. Elle est dense afin d'empêcher les gaz circulant de ou vers l'anode et les circulants de ou vers la cathode de se mélanger.

Chaque interconnecteur présente une forme générale planaire. Il est disposé entre deux cellules élémentaires consécutives.

Il est au contact, par une de ses grandes faces avec l'anode d'une cellule élémentaire et par l'autre de ses grandes faces, avec la cathode de la cellule élémentaire consécutive de l'empilement. Il comporte un premier ensemble de rainures 50 débouchant sur une grande face de l'interconnecteur et un deuxième ensemble de rainures 55 débouchant sur la grande face opposée de l'interconnecteur. Les ensembles de rainures définissent ainsi des chambres anodique et cathodique respectivement, dans lequel les échanges entre les gaz réactifs et porteurs et la cellule élémentaire peuvent s'opérer.

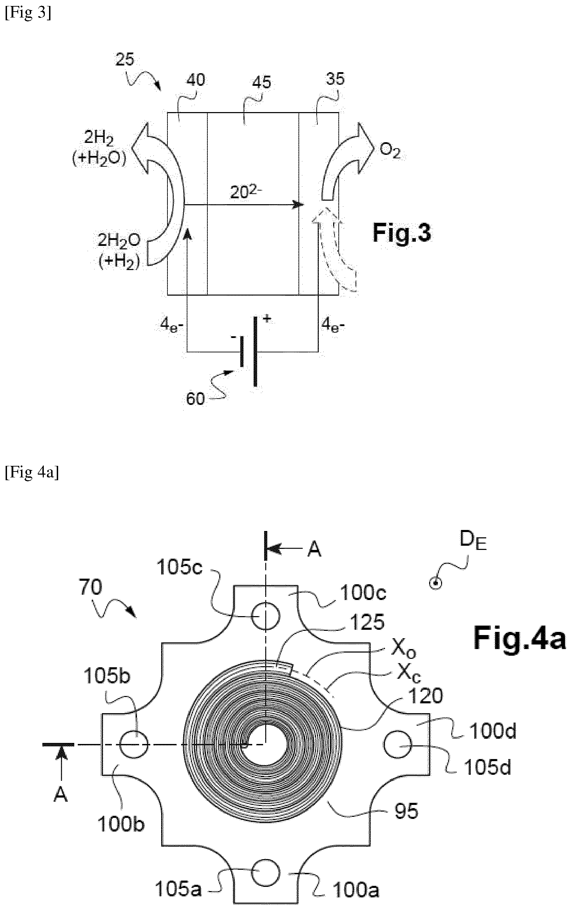

La figure 3 illustre de manière schématique les réactions d'oxydo-réduction s'opérant au moyen de la cellule élémentaire pour l'électrolyse de l'eau.

De la vapeur d'eau est injectée dans la chambre cathodique et pénètre dans les pores de la cathode. Sous l'action d'un courant électrique alimentant la cathode au moyen d'un générateur électrique 60, la vapeur d'eau est réduite sous forme d'hydrogène et d'ions oxygène. Les ions oxygènes migrent vers l'anode à travers la membrane électrolytique et atteignent l'anode, où ils cèdent des électrons pour établir la neutralité électrique du circuit. Du dioxygène se forme et est libéré dans la chambre anodique et est évacué au moyen d'un gaz porteur, de préférence de l'air, alimentant la chambre anodique.

Afin d'assurer l'alimentation en vapeur d'eau et en gaz porteur de la cathode et de l'anode respectivement, et l'évacuation du dihydrogène et du dioxygène produit à la cathode et à l'anode respectivement, l'unité électrochimique peut être traversée par des tubes d'alimentation anodique et d'évacuation anodique, non représentés, qui sont connectés à la chambre anodique et des tubes d'alimentation cathodique et d'évacuation cathodique connectés à la chambre cathodique, non représentés.

Le système de serrage comprime l'unité électrochimique, de manière à assurer d'une part le contact électrique de cellules élémentaires en série au moyen des interconnecteur métalliques, et d'autre part l'étanchéité des chambres anodiques et cathodiques pour éviter toute recombinaison entre les gaz produits par l'électrolyseur qui entraînerait une baisse du rendement d'électrolyse et le développement de zones chaudes.

Le système de serrage comporte une plaque de serrage 70 inférieure et une plaque de serrage 75 supérieure qui prennent en sandwich l'unité électrochimique.

Les plaques de serrage inférieure et supérieure sont métalliques, par exemple en acier AISI 310.

Elles ont une forme planaire et présentent chacune deux grandes faces 80a-b parallèles et perpendiculaires à la direction d'empilement des cellules élémentaires.

Pour éviter tout court-circuit avec l'unité électrochimique, l'unité électrochimique comporte des plaques électriquement isolantes 90a-b recouvrant les faces de l'empilement en regard des plaques de serrage. Les plaques électriquement isolantes sont interposées entre l'empilement et les plaques de serrage inférieure et supérieure.

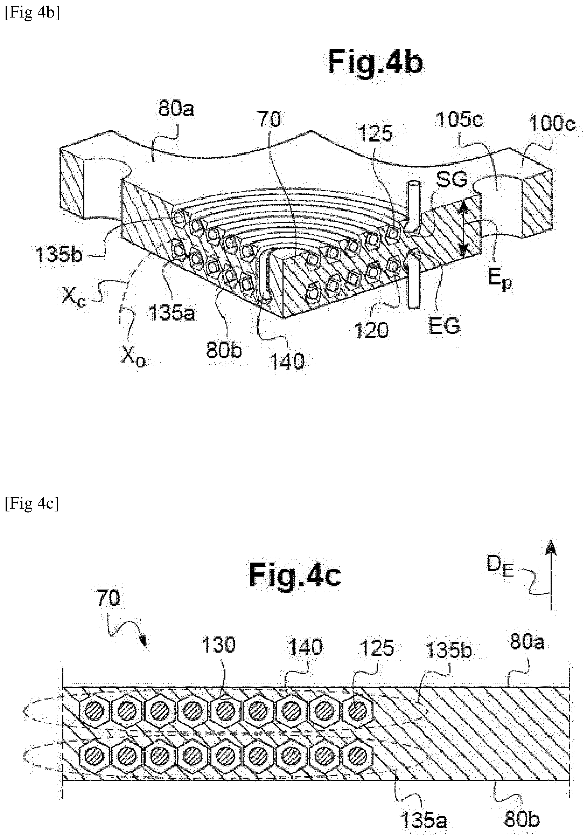

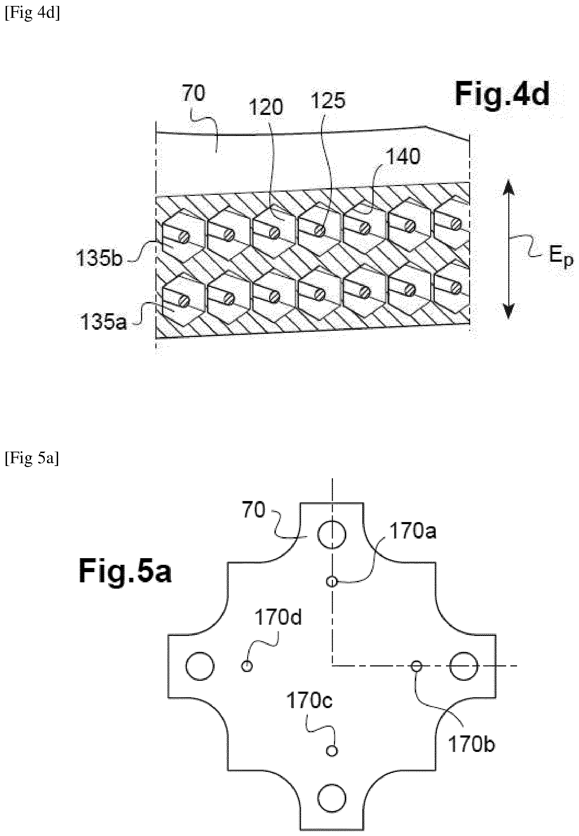

Les plaques de serrage inférieure et supérieure comportent chacune une partie centrale 95 en appui sur l'unité électrochimique et quatre bras 100a-d s'étendant dans le plan de la plaque à partir de la portion centrale, et qui sont disposés régulièrement autour de la direction d'empilement. Vu selon une direction normale à ses grandes faces, chacune des plaques de serrage est cruciforme, comme cela est illustré sur la figure 4a.

Les plaques de serrage inférieure et supérieure sont pourvues d'orifices 105a-d ménagés dans les bras, et qui les traversent de part en part dans leurs épaisseurs.

Le système de serrage comporte en outre des tiges de serrage 110a-b engagées dans les orifices correspondant des plaques de serrage inférieure et supérieure. Il comporte des organes de serrage 115 qui sont des écrous montés sur les tiges de serrage, de manière à maintenir une distance sensiblement constante entre les plaques de serrage inférieure et supérieure pour maintenir l'unité électrolytique sous compression. De tels organes et tiges de serrage, qui garantissent un contact électrique et une étanchéité sur une large plage de température sont décrit dans la demande FR 3 045 215 A1, incorporée par référence.

La plaque de serrage inférieure et la plaque de serrage supérieure sont monolithiques. Dans l'exemple illustré, en particulier, la plaque de serrage supérieure est exempte de conduit pour transporter un gaz. En variante, elle peut être conformée comme la plaque de serrage inférieure qui est décrite ci-après.

La plaque de serrage inférieure 70 est représentée schématiquement sur les figures 4a à 4d. Elle comporte un conduit d'alimentation 120 pour distribuer un gaz à l'unité électrochimique. Dans l'exemple illustré, le conduit d'alimentation est relié à la chambre cathodique de chaque cellule élémentaire pour alimenter la cathode en vapeur d'eau. Un organe chauffant résistif 125 sous la forme d'un câble électrique est disposé à l'intérieur de la plaque de serrage. Plus particulièrement, il est disposé dans le conduit d'alimentation à distance de la paroi 130 du conduit d'alimentation.

Le conduit d'alimentation débouche hors de la plaque de serrage par une ouverture d'entrée de gaz EG et une ouverture de sortie de gaz SG et s'étend selon le long d'un axe longitudinal curviligne Xc.

Le conduit d'alimentation s'étend dans la partie centrale de la plaque de serrage selon un plan parallèle à la grande face en appui sur l'unité électrochimique. Il est en outre disposé à distance de la grande face en appui sur l'unité électrochimique.

Par ailleurs, le conduit d'alimentation forme deux étages de conduit 135a-b qui présentent chacun une forme de spirale. La section transverse 140 du conduit d'alimentation est de forme hexagonale.

Les étages de conduit sont parallèles les uns aux autres et sont concentriques. Ils s'étendent selon des plans parallèles aux grandes faces de plaque qui sont disposés à des hauteurs différentes selon l'épaisseur Ep de la plaque.

Un des étages de conduit, dit étage inférieur 135a débouche par l'ouverture d'entrée de gaz sur la grande face 80b de la plaque de serrage opposée à la grande face 80a en regard de l'unité électrochimique.

Le deuxième étage 135b, proximal de la grande face en regard de l'unité électrochimique, débouche par l'ouverture de sortie de gaz sur la dite grande face.

Les étages de conduit sont en communication de fluide au moyen d'un canal de liaison 140 qui s'étend selon l'épaisseur de la plaque de débouche de part et d'autre dans les étages de conduit inférieur et supérieur.

Il suit l'axe longitudinal curviligne Xc spiralé de chaque étage de conduit et traverse le canal de liaison. Il est relié à un générateur de courant électrique, non représenté, qui est configuré pour fournir une puissance électrique suffisante pour échauffer le gaz circulant dans le canal d'alimentation à une température supérieure à 400 °C, de préférence comprise entre 650 °C et 800 °C.

La formation du canal d'alimentation sous la forme de deux spirales qui s'étendent dans la partie centrale de la plaque de serrage permet d'augmenter, en fonctionnement, la surface d'échange pour le transfert thermique entre l'organe chauffant résistif et le gaz circulant dans le conduit d'alimentation.

Par ailleurs, outre le chauffage par échange convectif du gaz circulant dans le conduit d'alimentation, l'organe chauffant résistif chauffe la paroi du conduit par convection, et la chaleur ainsi échangée est conduite dans la masse de la plaque de serrage. Elle est ensuite transportée par conduction jusque dans l'unité électrochimique pour chauffer les cellules élémentaires.

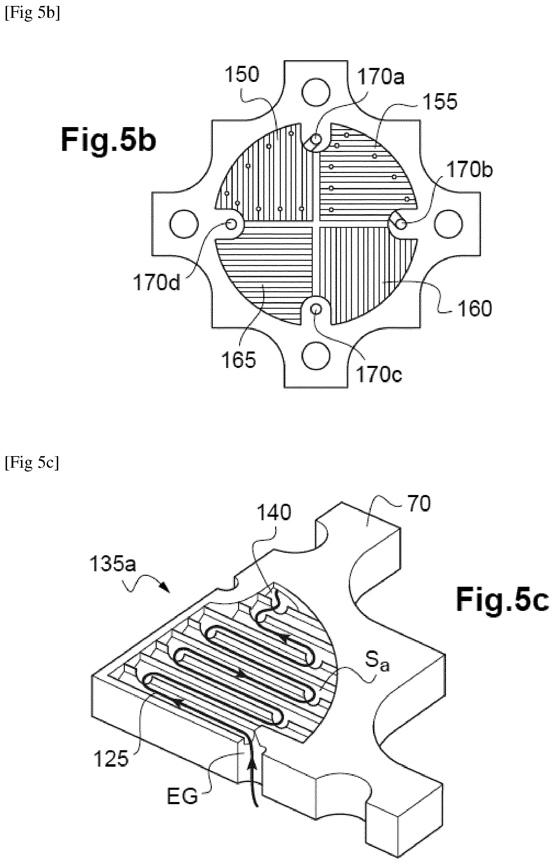

Les figures 5a à 5d illustrent un autre exemple. La plaque de serrage comporte quatre conduits 150, 155, 160, 165 débouchant chacun par deux ouvertures d'entrée et de sortie de gaz disposées sur les faces opposées de la plaque de serrage. Les quatre conduits sont par ailleurs en communication de fluide avec l'unité électrochimique. Les ouvertures d'entrée de gaz 170a-d des quatre conduits sont qui débouchent sur une même grande face de la plaque de serrage sont illustrés sur les figures 5a et 5b.

Les quatre conduits sont :
- un conduit d'alimentation cathodique 150, pour distribuer de la vapeur d'eau aux cathodes des cellules élémentaires,
- un conduit d'évacuation cathodique 160, pour évacuer le dihydrogène généré par la réduction de la vapeur d'eau au niveau des cathodes,

- un conduit d'alimentation anodique 155, pour distribuer un gaz porteur, par exemple de l'air aux anodes des cellules élémentaires, et
- un conduit d'évacuation anodique 165, pour évacuer le dioxygène généré par la réduction de la vapeur d'eau au niveau des cathodes.

Les quatre conduits sont disjoints les uns des autres et sont régulièrement répartis dans la partie centrale de la plaque de serrage. Chacun des quatre conduits peut comporter des étages de conduit reliés par un canal de liaison respectif.

Chacun des conduits présente une forme d'un serpentin formé de canaux adjacents les uns aux autres et reliés par des coudes.

L'électrolyseur comporte deux organes chauffants résistifs. Un des organes chauffants, dénommé organe chauffant anodique, est logé dans le conduit d'alimentation anodique pour chauffer la vapeur d'eau. L'autre organe chauffant, dénommé organe chauffant cathodique, est logé dans le conduit d'alimentation cathodique pour chauffer le gaz porteur.

Par souci de clarté du dessin, les organes chauffants ne sont pas représentés sur la figure 5b.

Dans une variante, l'électrolyseur peut comporter d'autres organes chauffants à l'intérieur de la plaque de serrage. En particulier, ils peuvent être pris en masse dans la plaque de serrage, afin de chauffer la plaque de serrage par échange conductif.

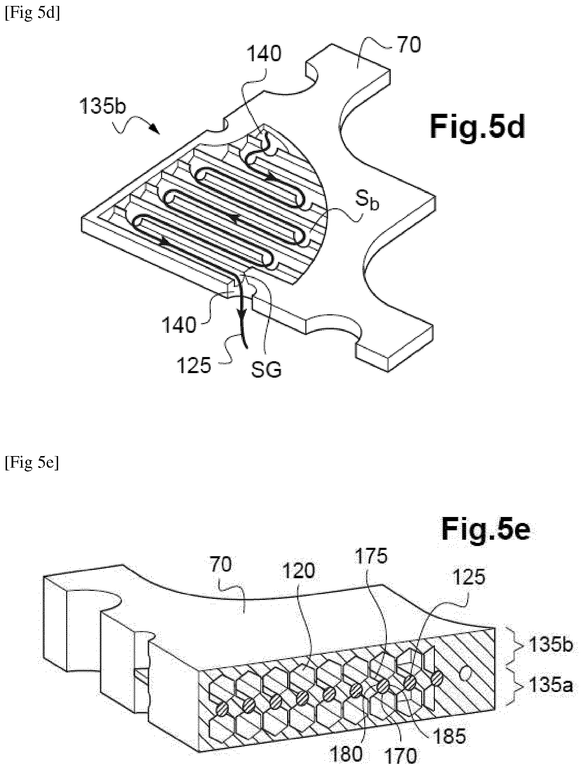

Les figures 5c et 5d illustrent, selon des plans de coupe parallèles aux grandes faces de la plaque de serrage, les étages de conduits inférieur 135a et supérieur 135b. La Figure 5c représente notamment l'étage de conduit inférieur débouchant par une de ses extrémités sur l'ouverture d'entrée de gaz EG et l'extrémité opposée sur le canal de liaison 140 qui relie les étages de conduit. La figure 5d représente l'étage de conduit supérieur qui débouche sur le canal de liaison 140 par une de ses extrémités et par l'ouverture de sortie de gaz SG par son extrémité opposée.

Un câble chauffant résistif 125 est disposé dans le conduit selon un axe longitudinal curviligne confondu avec l'axe longitudinal curviligne du conduit. Ainsi, la vapeur d'eau qui s'écoule dans le conduit d'alimentation cathodique depuis l'ouverture d'entrée de gaz jusqu'à l'ouverture de sortie de gaz, en passant à travers le canal de liaison, comme indiqué par les flèches sur les figures 5c et 5d. L'échange thermique est donc particulièrement efficace puisqu'il s'effectue entre le câble chauffant résistif et la vapeur d'eau peut donc s'opérer sur toute la longueur du conduit d'alimentation. Par ailleurs, la forme en serpentin Sa-b sur les deux étages de conduit développe une surface de la paroi du conduit d'alimentation exposée au rayonnement thermique du câble chauffant élevée, ce qui permet de distribuer de façon sensiblement homogène une partie de la chaleur dissipée par le câble dans la partie centrale de la plaque de serrage.

La figure 5e illustre une variante de réalisation de la plaque de serrage illustrée sur les figures 5a à 5d.

Le dispositif illustré sur la figure v diffère de celui illustré sur les figures 5a à 5d en ce que l'organe chauffant résistif est logé dans une rainure ménagée entre les conduits inférieur et supérieur et reliant les conduits inférieur et supérieur.

L'organe chauffant résistif remplit entièrement la rainure et forme un serpentin dont l'axe longitudinal curviligne est parallèle aux axes longitudinaux des étages de conduit inférieur et supérieur. Vus selon une direction normale aux grandes faces de la plaque de serrage, les axes longitudinaux des étages de conduit inférieur et supérieur sont confondus.

Une partie de la face latérale 170 de l'organe chauffant résistif définit une partie de la paroi de l'étage de conduit inférieur et autre partie 175 de la face latérale de l'organe chauffant résistif définit une partie de la paroi de l'étage du conduit supérieur. En outre, les parties complémentaires 180, 185 de la face latérale de l'organe chauffant résistif sont au contact de la plaque de serrage. Le mode de réalisation illustré sur la figure 5e requiert un organe chauffant de plus faible longueur que celui illustré sur la figure 5c. Il présente avantageusement un compromis pour chauffer directement par conduction la plaque de serrage et par convection la vapeur d'eau s'écoulant dans le conduit d'alimentation.

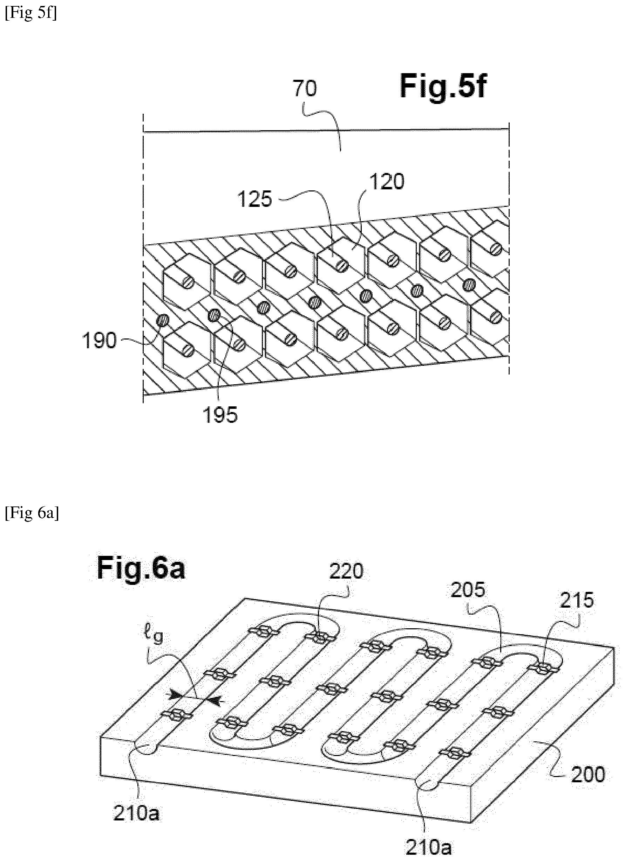

L'exemple illustré sur la figure 5f représente encore une autre variante de réalisation.

La plaque de serrage illustrée sur la figure 5f diffère de celle illustrée sur la figure 5d en ce que la plaque de serrage comporte un trou 190 serpentant selon un axe parallèle aux axes longitudinaux curvilignes des étages de conduit inférieur et supérieur. Un premier organe chauffant 125 résistif est logé dans le conduit d'alimentation, selon la disposition illustrée sur les figures 5b à 5d et un deuxième organe chauffant 195 résistif de forme complémentaire à celle du trou est entièrement logé dans le trou et est en contact sur l'intégralité de sa face latérale avec la paroi du trou. Le deuxième organe chauffant apparaît ainsi logé en masse dans la plaque de serrage. Le dispositif selon le mode de réalisation illustré sur la figure 5f permet un chauffage particulièrement efficace de la plaque de serrage par échange thermique par conduction au moyen du deuxième organe chauffant résistif et un de la vapeur d'eau s'écoulant dans le conduit d'alimentation par échange convectif au moyen du premier organe chauffant résistif.

Par ailleurs, le deuxième organe chauffant peut s'étendre selon un axe longitudinal curviligne qui est parallèle à l'axe longitudinal curviligne du conduit d'alimentation. Ainsi, si le premier organe chauffant devient défectueux, la chaleur générée par le deuxième organe de chauffage peut participer à préchauffer le gaz circulant dans le conduit d'alimentation en étant conduite à travers la masse de la plaque de serrage entre le deuxième organe chauffant résistif et le conduit d'alimentation.

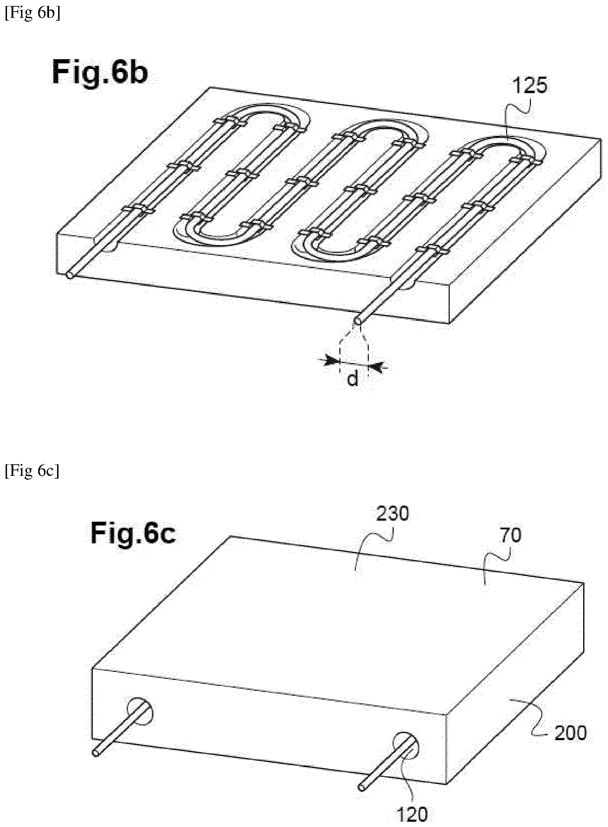

Les figures 6a à 6c illustrent de manière schématique la fabrication d'un système de serrage du type de celui illustré sur les figures 4a à 4c. Le système de serrage illustré sur cet exemple diffère notamment de celui illustré sur les figures 4a à 4c par la forme du contour de la section transverse du conduit.

Une pièce de base 200 présentant une forme générale d'une plaque est pourvue d'une rainure 205 ménagée sur une de ses grandes faces et qui s'étend entre deux ouvertures d'extrémité 210a-b débouchant sur une même face latérale.

La pièce de base peut être obtenue par fabrication additive. En variante, la rainure peut être préalablement usinée, par exemple fraisée dans la pièce de base.

La rainure présente une section transverse de contour semi-circulaire.

La pièce de base est en outre pourvue d'agrafes 215, disposées deux à deux en porte à faux sur la grande face de la pièce de base et superposées à la rainure. Elles définissent un logement 220 de hauteur inférieure ou égale au diamètre de l'organe chauffant.

Comme illustré sur la figure 6b, un organe chauffant 125 sous la forme d'un câble flexible ou d'une tige rigide et présentant un diamètre d inférieur à la largeur lg de la rainure est superposé sur la rainure. Il est fixé par rapport à la pièce de base en étant engagé dans les logements d'agrafes. Comme cela est observé sur la figure 6b, les agrafes maintiennent l'organe chauffant à distance de la rainure.

Un matériau de revêtement 230, de composition identique à celui de la pièce de base est ensuite déposé sur la pièce de base en passes successives d'une tête de dépôt d'un dispositif de fabrication additive, jusqu'à formation de la plaque de serrage. Notamment, la tête de dépôt est déplacée de manière à former un conduit qui prolonge la rainure formée dans la pièce de base par une portion semi circulaire complémentaire, l'organe chauffant étant maintenu à distance de la paroi du conduit.

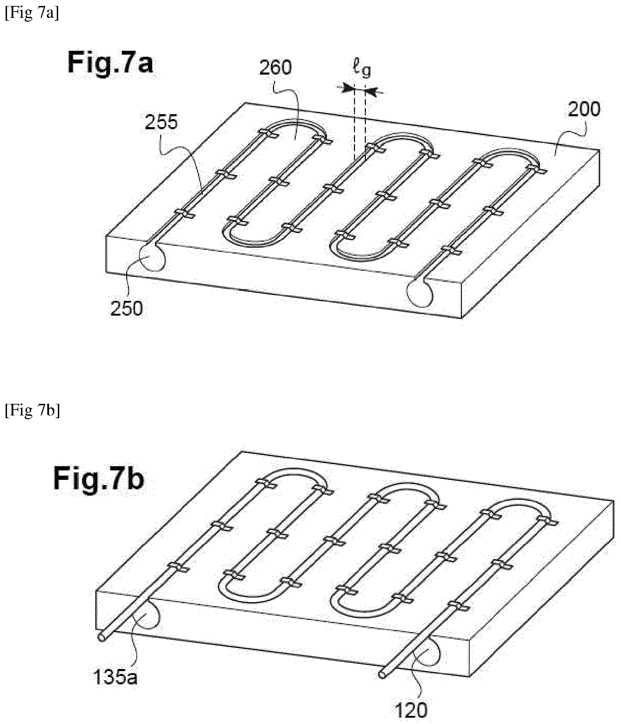

Les figures 7a à 7c illustrent de manière schématique la fabrication du système de serrage du type illustré sur la figure 5e.

Pour cet exemple, la pièce de base diffère de celle illustrée sur la figure 6a en ce que la rainure présente une section transverse 250 ayant un contour ayant une portion circulaire s'étendant angulairement sur plus de 270°, et qui se prolonge par une ouverture supérieure 255 débouchant sur la face supérieure 260 de la pièce de base. L'ouverture supérieure présente une largeur, mesurée transversalement à l'axe longitudinal curviligne de la rainure, inférieure au diamètre de la portion circulaire.

La pièce de base est obtenue aisément par fabrication additive. Elle est particulièrement difficile à fabriquer par usinage.

Par ailleurs, la largeur lg de l'ouverture de la rainure est inférieure au diamètre de l'organe chauffant. Ainsi, en superposant l'organe chauffant sur la rainure au contact de la pièce de base, comme illustré sur la figure 7b, l'organe chauffant est appuyé sur les bords de l'ouverture supérieure et obture l'ouverture supérieure de la rainure, définissant ainsi un premier conduit 120 ou un premier étage de conduit 135a.

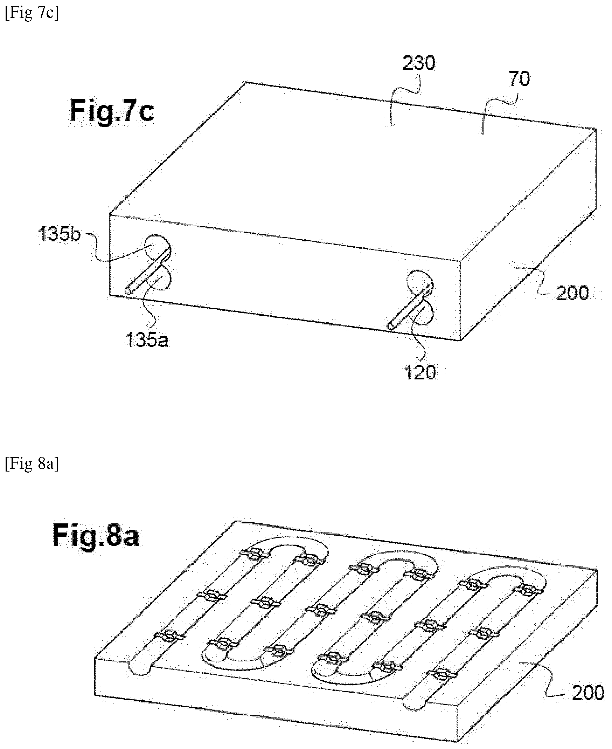

Par la suite, comme illustré sur la figure 7c, le matériau de revêtement est déposé par fabrication additive sur la face supérieure de la pièce de base et en partie sur l'organe chauffant, de manière à ce que des parties de l'organe chauffant soit pris en masse dans la pièce de base, et à former un deuxième étage de conduit relié au premier conduit ou un deuxième étage de conduit superposé à l'organe chauffant. La fabrication additive est mise en œuvre de sorte que l'organe chauffant définisse en partie la paroi du deuxième conduit ou du deuxième étage de conduit.

Bien évidemment, le matériau de revêtement peut être déposé différemment sur la pièce de base. Par exemple, il peut être déposé de telle sorte que toutes les couches déposées recouvrent intégralement la pièce de base et l'organe chauffant.

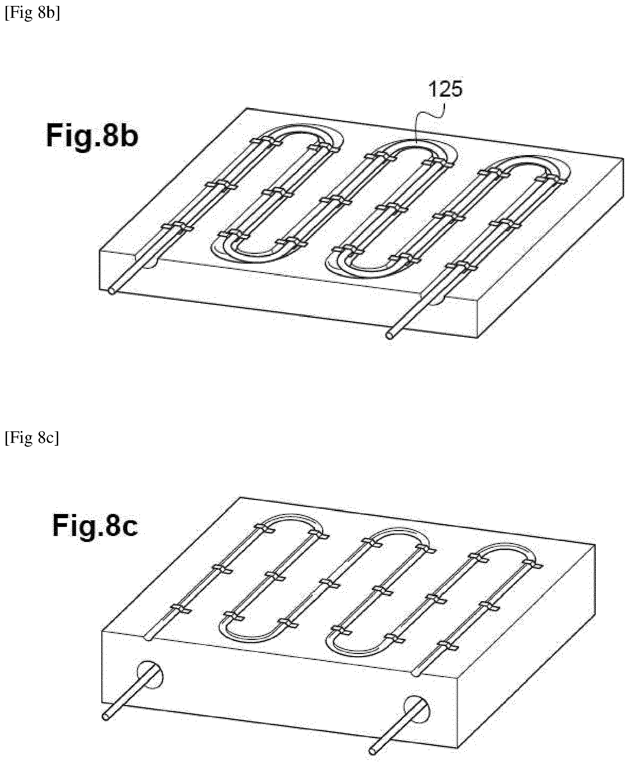

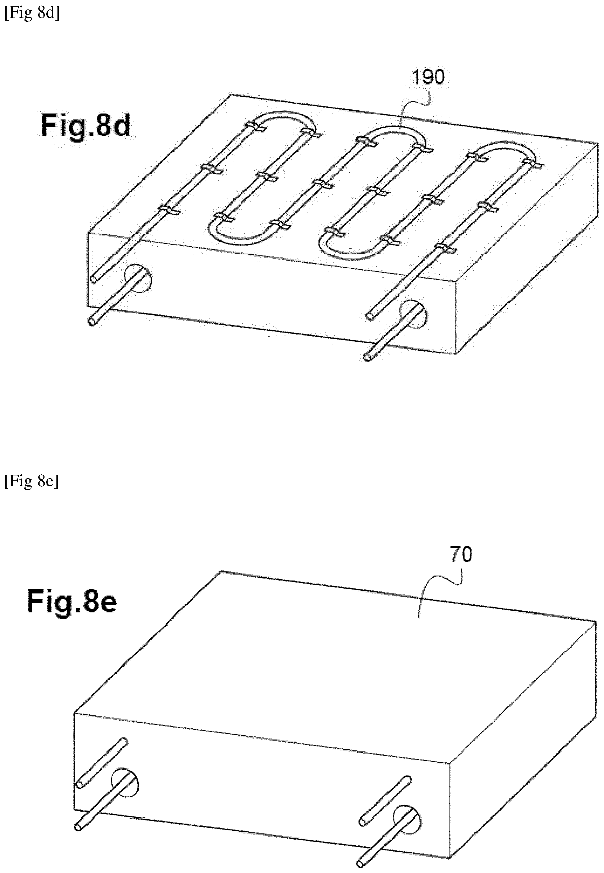

Les figures 8a à8e illustrent un exemple de procédé mis en œuvre pour obtenir le système de serrage du type de celui illustré sur la figure 5f. Il comporte la fabrication d'un premier conduit comme illustré sur les figures 8a à 8c, selon la méthode décrite ci-dessus et illustrée sur les figures 7a à 7c, à ceci près que le matériau de revêtement est déposé jusqu'à formation d'une deuxième rainure, conformée pour recevoir, comme illustrée sur la figure 8d, un deuxième organe chauffant. Le deuxième organe chauffant est ensuite recouvert par le matériau de revêtement, selon l'exemple illustré par les figures 6a à 6c.

## Revendications

1. Dispositif électrochimique (5) choisi parmi une pile à combustible et un électrolyseur, le dispositif électrochimique comportant :
- une unité électrochimique (10) comportant un empilement (20) de cellules élémentaires (25) comportant chacune une anode (35), une cathode (40) et une membrane électrolytique (45) prise en sandwich entre l'anode et la cathode,
- un système de serrage (15) comportant une plaque de serrage monolithique et un organe chauffant résistif (125) logé au moins en partie à l'intérieur de la plaque de serrage,
la plaque de serrage (70) comprimant l'unité électrochimique et comportant un conduit d'alimentation (120) pour distribuer un gaz à l'unité électrochimique, le conduit d'alimentation ayant au moins une portion courbe s'étendant dans la masse de la plaque de serrage.

2. Dispositif selon la revendication 1, la portion de l'organe chauffant logée à l'intérieur de la plaque de serrage et le conduit d'alimentation s'étendant selon des axes longitudinaux curvilignes (Xo, Xc) parallèles.

3. Dispositif selon la revendication 2, la portion de l'organe chauffant logée à l'intérieur de la plaque de serrage et le conduit d'alimentation s'étendant selon des axes longitudinaux curvilignes confondus.

4. Dispositif selon l'une quelconque des revendications précédentes, l'organe chauffant étant au moins en partie logé dans le conduit d'alimentation.

5. Dispositif selon l'une quelconque des revendications 1 à 4, l'organe chauffant étant au contact de la plaque de serrage et définissant une partie de la paroi du conduit d'alimentation.

6. Dispositif selon l'une quelconque des revendications 1 à 4, la portion de l'organe chauffant logée à l'intérieur de la plaque de serrage étant entièrement en contact avec la plaque de serrage.

7. Dispositif selon l'une quelconque des revendications précédentes, le conduit d'alimentation comportant une portion méandréiforme, notamment présentant une forme d'un serpentin, ou présentant une forme d'une spirale.

8. Dispositif selon l'une quelconque des revendications précédentes, le conduit d'alimentation comportant plusieurs, notamment deux, étages de conduit, espacés l'un de l'autre selon l'épaisseur de la plaque de serrage, et qui s'étendent chacun dans des plans parallèles à une ou plusieurs des grandes faces de la plaque de serrage.

9. Dispositif selon l'une quelconque des revendications précédentes, le conduit d'alimentation étant en communication de fluide avec la cathode ou avec l'anode de chaque cellule élémentaire respectivement, pour alimenter la cathode en un gaz réactif de cathode ou l'anode en gaz réactif d'anode et/ou en gaz porteur.

10. Dispositif selon l'une quelconque des revendications précédentes, la plaque de serrage comportant :
- un conduit d'alimentation cathodique (150) en communication de fluide avec la cathode de chaque cellule élémentaire, pour alimenter la cathode en un gaz réactif, et
- un conduit d'alimentation anodique (155) en communication de fluide avec l'anode de chaque cellule élémentaire, pour alimenter l'anode en un gaz réactif et/ou un gaz porteur.

11. Dispositif selon la revendication précédente, comportant un organe chauffant cathodique et un organe chauffant anodique, l'organe chauffant cathodique et le conduit d'alimentation cathodique et/ou l'organe chauffant anodique et le conduit d'alimentation anodique étant tels que selon l'une quelconque des revendications précédentes.

12. Dispositif selon l'une quelconque des revendications 10 et 11, la plaque de serrage comportant un conduit d'évacuation anodique (165) et un conduit d'évacuation cathodique (160) comportant chacun une portion courbe, et étant ménagés dans la masse de la plaque de serrage, pour évacuer un gaz de l'anode, de la cathode respectivement, hors de l'unité électrochimique.

13. Dispositif selon l'une quelconque des revendications précédentes, la plaque de serrage étant en un alliage réfractaire, par exemple en un alliage réfractaire à base de nickel, par exemple l'Inconel 600, ou en un acier austénitique réfractaire, par exemple l'acier AISI310.

14. Procédé de fabrication d'un système de serrage d'un dispositif électrochimique selon l'une quelconque des revendications précédentes, le procédé comportant
a) la fourniture d'une pièce de base (200) et d'au moins un organe chauffant résistif (125) disposé sur la pièce de base, et
b) le dépôt, au moyen d'une méthode de fabrication additive, d'un matériau de revêtement au contact de la pièce de base, et optionnellement de l'organe chauffant, jusqu'à formation d'une plaque de serrage (70) à l'intérieur de laquelle au moins une partie de l'organe chauffant est logée.

15. Procédé de fabrication selon la revendication précédente, comportant préalablement à l'étape a) la production de la pièce de base par la méthode de fabrication additive.

## Patentansprüche

1. Elektrochemische Vorrichtung (5), die aus einer Brennstoffzelle und einem Elektrolyseur ausgewählt wird, wobei die elektrochemische Vorrichtung umfasst:
- eine elektrochemische Einheit (10), die einen Stapel (20) von Elementarzellen (25) umfasst, die jeweils eine Anode (35), eine Kathode (40) und eine elektrolytische Membran (45) umfassen, die sandwichartig zwischen der Anode und der Kathode angeordnet ist,
- ein Klemmsystem (15), das eine monolithische Klemmplatte und ein resistives Heizelement (125) umfasst, das zumindest teilweise im Innern der Klemmplatte untergebracht ist, wobei die Klemmplatte (70) die elektrochemische Einheit zusammendrückt und eine Versorgungsleitung (120) umfasst, um der elektrochemischen Einheit ein Gas zuzuführen, wobei die Versorgungsleitung mindestens einen gekrümmten Abschnitt hat, der sich in der Masse der Klemmplatte erstreckt.

2. Vorrichtung nach Anspruch 1, wobei sich der im Innern der Klemmplatte untergebrachte Abschnitt des Heizelements und die Versorgungsleitung in parallelen krummlinigen Längsachsen (Xo, Xc) erstrecken.

3. Vorrichtung nach Anspruch 2, wobei sich der im Innern der Klemmplatte untergebrachte Abschnitt des Heizelements und die Versorgungsleitung in zusammenfallenden krummlinigen Längsachsen erstrecken.

4. Vorrichtung nach einem der vorhergehenden Ansprüche, wobei das Heizelement zumindest teilweise in der Versorgungsleitung untergebracht ist.

5. Vorrichtung nach einem der Ansprüche 1 bis 4, wobei das Heizelement in Kontakt mit der Klemmplatte steht und einen Teil der Wand der Versorgungsleitung definiert.

6. Vorrichtung nach einem der Ansprüche 1 bis 4, wobei der im Innern der Klemmplatte untergebrachte Abschnitt des Heizelements vollständig in Kontakt mit der Klemmplatte ist.

7. Vorrichtung nach einem der vorhergehenden Ansprüche, wobei die Versorgungsleitung einen mäanderförmigen Abschnitt umfasst, der insbesondere eine Form einer Rohrwendel aufweist oder eine Form einer Spirale aufweist.

8. Vorrichtung nach einem der vorhergehenden Ansprüche, wobei die Versorgungsleitung mehrere, insbesondere zwei, Leitungsetagen umfasst, die entsprechend der Dicke der Klemmplatte voneinander beabstandet sind und sich jeweils in Ebenen parallel zu einer oder mehreren der großen Flächen der Klemmplatte erstrecken.

9. Vorrichtung nach einem der vorhergehenden Ansprüche, wobei die Versorgungsleitung in fluidischer Verbindung mit der Kathode bzw. mit der Anode jedes Elementarzelle steht, um die Kathode mit einem reaktiven Kathodengas oder die Anode mit einem reaktiven Anodengas und/oder mit einem Trägergas zu versorgen.

10. Vorrichtung nach einem der vorhergehenden Ansprüche, wobei die Klemmplatte umfasst:
- eine kathodische Versorgungsleitung (150) in fluidischer Verbindung mit der Kathode jeder Elementarzelle, um die Kathode mit einem reaktiven Gas zu versorgen, und
- eine anodische Versorgungsleitung (155) in fluidischer Verbindung mit der Anode jeder Elementarzelle, um die Anode mit einem reaktiven Gas und/oder einem Trägergas zu versorgen.

11. Vorrichtung nach einem der vorhergehenden Ansprüche, die ein kathodisches Heizelement und ein anodisches Heizelement umfasst, wobei das kathodische Heizelement und die kathodische Versorgungsleitung und/oder das anodische Heizelement und die anodische Versorgungsleitung gemäß einem der vorhergehenden Ansprüche beschaffen sind.

12. Vorrichtung nach einem der Ansprüche 10 und 11, wobei die Klemmplatte eine anodische Abführleitung (165) und eine kathodische Abführleitung (160) umfasst, die jeweils einen gekrümmten Abschnitt umfassen und in der Masse der Klemmplatte eingelassen sind, um ein Gas der Anode bzw. der Kathode aus der elektrochemischen Einheit abzuführen.

13. Vorrichtung nach einem der vorhergehenden Ansprüche, wobei die Klemmplatte aus einer feuerfesten Legierung besteht, beispielsweise aus einer feuerfesten Legierung auf Nickelbasis, beispielsweise Inconel 600, oder aus feuerfestem austenitischem Stahl, beispielsweise dem Stahl AISI 310.

14. Verfahren zur Herstellung eines Klemmsystems einer elektrochemischen Vorrichtung nach einem der vorhergehenden Ansprüche, wobei das Verfahren umfasst:
a) Bereitstellung eines Basisteils (200) und mindestens eines auf dem Basisteil angeordneten resistiven Heizelements (125), und
b) Abscheidung eines Beschichtungsmaterials in Kontakt mit dem Basisteil und wahlweise mit dem Heizelement mittels eines additiven Herstellungsverfahrens bis zur Bildung einer Klemmplatte (70), in deren Innern zumindest ein Teil des Heizelements untergebracht ist.

15. Verfahren zur Herstellung nach dem vorhergehenden Anspruch, das vor Schritt a) die Herstellung des Basisteils durch das additive Herstellungsverfahren umfasst.

## Claims

1. Electrochemical device (5) chosen from among a fuel cell and an electrolyser, the electrochemical device comprising:
- an electrochemical unit (10) comprising a stack (20) of elementary cells (25) each comprising an anode (35), a cathode (40) and an electrolytic membrane (45) sandwiched between the anode and the cathode,
- a clamping system (15) comprising a monolithic clamping plate and a resistive heating member (125) housed at least partly inside the clamping plate,
the clamping plate (70) compressing the electrochemical unit and comprising a supply duct (120) for dispensing a gas to the electrochemical unit, the supply duct having at least one curved portion extending in the mass of the clamping plate.

2. Device according to Claim 1, the portion of the heating member housed inside the clamping plate and the supply duct extending along parallel curvilinear longitudinal axes (Xo, Xc).

3. Device according to Claim 2, the portion of the heating member housed inside the clamping plate and the supply duct extending along coinciding curvilinear longitudinal axes.

4. Device according to any one of the preceding claims, the heating member being at least partly housed in the supply duct.

5. Device according to any one of Claims 1 to 4, the heating member being in contact with the clamping plate and defining a part of the wall of the supply duct.

6. Device according to any one of Claims 1 to 4, the portion of the heating member housed inside the clamping plate being entirely in contact with the clamping plate.

7. Device according to any one of the preceding claims, the supply duct comprising a meandering portion, notably having a serpentine form, or having a spiral form.

8. Device according to any one of the preceding claims, the supply duct comprising several, notably two, duct stages, spaced apart from one another along the thickness of the clamping plate, and which each extend in planes parallel to one or more of the large faces of the clamping plate.

9. Device according to any one of the preceding claims, the supply duct being fluidically connected with the cathode or with the anode of each elementary cell respectively, to supply the cathode with a cathode reactive gas or the anode with anode reactive gas and/or with carrier gas.

10. Device according to any one of the preceding claims, the clamping plate comprising:
- a cathodic supply duct (150) fluidically connected with the cathode of each elementary cell, for supplying the cathode with a reactive gas, and
- an anodic supply duct (155) fluidically connected with the anode of each elementary cell, for supplying the anode with a reactive gas and/or a carrier gas.

11. Device according to the preceding claim, comprising a cathodic heating member and an anodic heating member, the cathodic heating member and the cathodic supply duct and/or the anodic heating member and the anodic supply duct being in accordance with any one of the preceding claims.

12. Device according to either one of Claims 10 and 11, the clamping plate comprising an anodic discharge duct (165) and a cathodic discharge duct (160) each comprising a curved portion, and each formed in the mass of the clamping plate, for discharging a gas from the anode, respectively from the cathode, out of the electrochemical unit.

13. Device according to any one of the preceding claims, the clamping plate being made of a refractory alloy, for example a refractory alloy based on nickel, for example Inconel 600, or of refractory austenitic steel, for example AISI 310 steel.

14. Method for manufacturing a clamping system of an electrochemical device according to any one of the preceding claims, the method comprising
a) the provision of a base part (200) and at least one resistive heating member (125) disposed on the base part, and
b) the deposition, by means of an additive manufacturing method, of a coating material in contact with the base part, and optionally the heating member, until a clamping plate (70) is formed, inside which at least a part of the heating member is housed.

15. Manufacturing method according to the preceding claim, comprising, prior to the step a), the production of the base part by the additive manufacturing method.
